# FASCICULE DE BREVET EUROPEEN

(11) **EP 4 554 836 B1**
(45) Date de publication et mention de la délivrance du brevet: **25.03.2026**
(21) Numéro de dépôt: 23741694.6
(22) Date de dépôt: 12.07.2023
(51) Int. Cl.: B62B 3/00, B62B 3/10, B65F 1/12, B65F 3/00, B62B 5/00

(54) **CAGE POUR MATELAS USAGES**
BEHÄLTER FÜR GEBRAUCHTE MATRATZEN
CONTAINER FOR USED MATTRESSES

(30) Priorité: 13.07.2022 BE 202205571
(43) Date de publication de la demande: 21.05.2025
(73) Titulaire: Veolia Environnement, 75008 Paris (FR)
(72) Inventeur: CHABOTIER, Christian, 5590 Achêne Ciney (BE); BIDDELOO, Dominic, 2400 MOL (BE); REYNTJENS, Edward, 9070 Destelbergen-Heusden (BE)
(74) Mandataire: Novagraaf Technologies
(86) Numéro de dépôt international: PCT/EP2023/069382
(87) Numéro de publication internationale: WO 2024/013262

(56) Documents cités:
- WO-A1-2015/060719
- CN-A- 106 115 133
- CN-A- 113 955 356
- CN-A- 114 476 441
- FR-A1- 2 920 414
- US-A1- 2014 144 808

## Description

La présente invention a pour objet une cage pour matelas usagés destinée à être déchargée dans un camion compacteur de déchets. Elle a également pour objet un procédé de chargement de matelas usagés dans un camion compacteur de déchets, mettant en oeuvre la cage à matelas selon l'invention.

On connaît plusieurs solutions pour collecter des matelas usagés.

Les matelas usagés sont évacués des sites de collecte et de stockage des clients (parcs à conteneurs, déchetterie, entrepôts de fournisseurs de matelas...) par des camions compacteurs ou par des camions standards. Un camion compacteur peut transporter une capacité de l'ordre de 5 tonnes de matelas tandis qu'un camion standard ne permet d'atteindre qu'une capacité de l'ordre de 500 kg de matelas.

Les matelas peuvent être recyclés. Pour qu'ils puissent être recyclés, ils doivent être stockés au sec.

Les matelas collectés dans un camion standard sont généralement déchargés dans un centre de stockage intermédiaire. Depuis ce centre, des semi-remorques à plancher mobile (Walking Floor en langue anglaise) pouvant atteindre une capacité de 4 tonnes de matelas transportent les matelas vers une installation de recyclage. Les conditions dans les centres de stockage intermédiaires ne sont pas toujours bonnes et peuvent entraîner une détérioration de la qualité des matelas pour le recyclage.

Une solution de collecte de matelas consiste à utiliser des cages standards (rack à ridelles de forme parallélépipédique) dans lesquelles sont empilés les matelas. Les cages sont déchargées manuellement par le chauffeur du camion de collecte et un ripeur.

Des exemples de cages pouvant convenir à la collecte de matelas usagés sont décrits dans les documents CN106115133A, US2014/144808A1et WO2015/060719A.

Il est également connu de charger directement les matelas dans un camion compacteur. Cette opération est réalisée par le chauffeur du camion et un ripeur. Le processus de chargement reste toutefois manuel, chronophage, non hygiénique et non ergonomique, les matelas étant encombrants et lourds. Les clients sont en outre peu disposés à aider au chargement des matelas.

Une autre solution consiste à collecter les matelas dans des conteneurs qui sont chargés directement par les usagers. Ces conteneurs sont fermés, pour que les matelas restent secs. Les usagers doivent entrer dans le conteneur pour déposer leur matelas. Cette solution entraîne un mauvais empilement des matelas, dangereux pour les usagers, et un remplissage des conteneurs non optimal, d'où un faible tonnage (0,5 tonne). Ces conteneurs sont ensuite déplacés par camion vers un centre de stockage intermédiaire.

La présente invention vise à remédier à ces inconvénients.

La présente invention propose notamment une cage pour matelas usagés, facilement manœuvrable, pouvant être basculée dans un camion compacteur de déchets standard, permettant d'éviter un chargement manuel, de réduire le temps de chargement du camion, d'éviter le contact des matelas avec le personnel lors du chargement, la cage étant ergonomique.

L'invention a ainsi pour objet une cage pour matelas usagés destinée à être déchargée dans un camion compacteur de déchets.

La cage selon l'invention comprend :
- une face avant, s'étendant entre une extrémité inférieure et une extrémité supérieure de la face avant, et munie d'un élément de liaison et d'accrochage destiné à l'accrochage de la cage au camion,
- une face arrière,
- deux faces latérales et
- une face inférieure munie d'un plancher mobile,
la face avant présentant une hauteur inférieure à celle de la face arrière, de manière à définir une ouverture de chargement de matelas, et le plancher mobile étant monté à rotation autour d'un axe situé préférentiellement à l'arrière de la cage, et actionné en rotation par au moins un actionneur, de manière à pouvoir pivoter entre par exemple une position standard de chargement de matelas dans laquelle le plancher mobile s'étend au niveau de l'extrémité inférieure de la face avant ou à proximité, et une position de basculement dans laquelle l'extrémité avant du plancher mobile est surélevée par rapport à l'extrémité inférieure de la face avant.

Ledit au moins un actionneur peut être un vérin ou un ressort à gaz. Lorsque l'actionneur est comprimé par le poids des matelas, le plancher s'abaisse vers une position horizontale. Plus le poids appliqué sur l'actionneur diminue, plus l'actionneur se détend et pousse sous le plancher ce qui le fait pivoter.

La cage est avantageusement munie de roulettes et d'au moins une poignée.

Les faces latérales peuvent présenter chacune à l'arrière une partie rectangulaire de hauteur égale à la hauteur de la face arrière, suivie à l'avant d'une partie trapézoïdale de hauteur évoluant progressivement de l'arrière vers l'avant entre la hauteur de la face arrière et la hauteur de la face avant. La forme de la partie avant permet d'éviter que la cage heurte le camion en position de basculement.

La face arrière est avantageusement munie d'une ouverture.

La cage peut comprendre en outre un élément couvrant fixé au niveau de la face arrière et destiné à recouvrir la cage.

La face arrière de la cage peut être munie d'une zone de réception de l'élément couvrant replié.

L'invention a également pour objet l'utilisation d'une cage décrite ci-dessus pour le chargement de matelas usagés dans un camion compacteur de déchets.

L'invention a enfin pour objet un procédé de chargement de matelas usagés dans un camion compacteur de déchets.

Le procédé selon l'invention met en œuvre une cage décrite ci-dessus.

Le procédé peut comprendre :
- une étape de chargement en matelas usagés d'une cage décrite ci-dessus,
- une étape d'accrochage de la cage au camion,
- une étape de basculement de la cage vers le camion, de manière à charger le camion en matelas usagés, ladite étape de basculement comprenant l'actionnement dudit au moins un actionneur de la cage de manière à faire pivoter le plancher mobile de la cage jusqu'à sa position de basculement.

D'autres avantages et particularités de la présente invention résulteront de la description qui va suivre, donnée à titre d'exemple non limitatif et faite en référence aux figures annexées :
[Fig. 1] est une vue latérale d'une cage à matelas selon l'invention,
[Fig. 2] est une vue en perspective arrière de la cage,
[Fig. 3] est une vue avant de la cage,
[Fig. 4] est une première vue en perspective de la cage, lorsqu'elle est revêtue d'un élément couvrant,
[Fig. 5] est une deuxième vue en perspective de la cage, lorsqu'elle est revêtue d'un élément couvrant,
[Fig. 6] est une troisième vue en perspective de la cage, lorsqu'elle est revêtue d'un élément couvrant,
[Fig. 7] est une vue latérale de la cage, dans une première configuration du plancher,
[Fig. 8] est une vue latérale de la cage, dans une deuxième configuration du plancher,
[Fig. 9] est une vue latérale de la cage, lors d'un déchargement des matelas dans un camion compacteur de déchets,
[Fig. 10] est une vue en perspective de la cage, lors d'une première étape de déchargement des matelas dans un camion compacteur de déchets,
[Fig. 11] est une vue en perspective de la cage, lors d'une deuxième étape de déchargement des matelas dans un camion compacteur de déchets,
[Fig. 12] est une vue en perspective de la cage, lors d'une troisième étape de déchargement des matelas dans un camion compacteur de déchets, et
[Fig. 13] est une vue en perspective de la cage, lors d'une quatrième étape de déchargement des matelas dans un camion compacteur de déchets.

### DESCRIPTION DETAILLEE

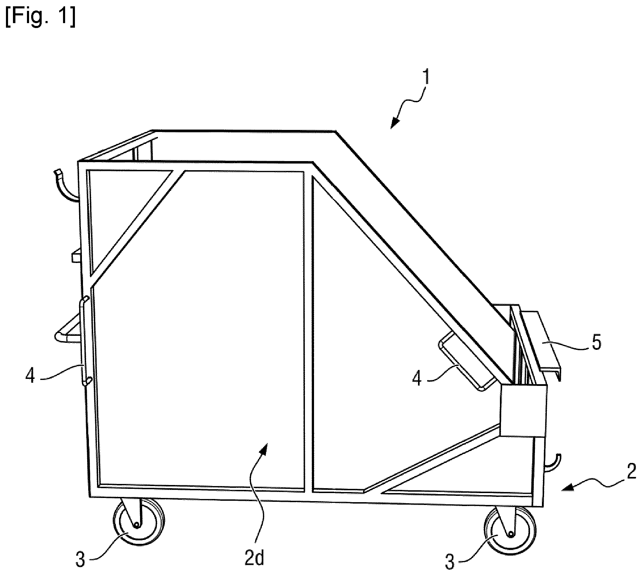

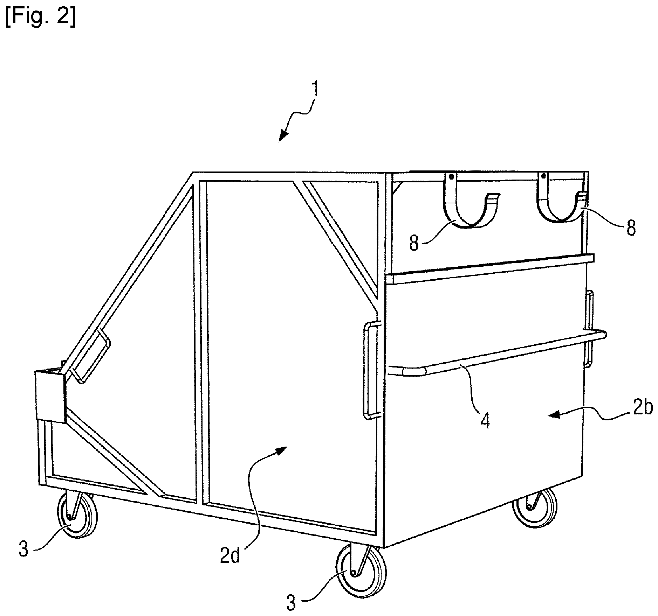

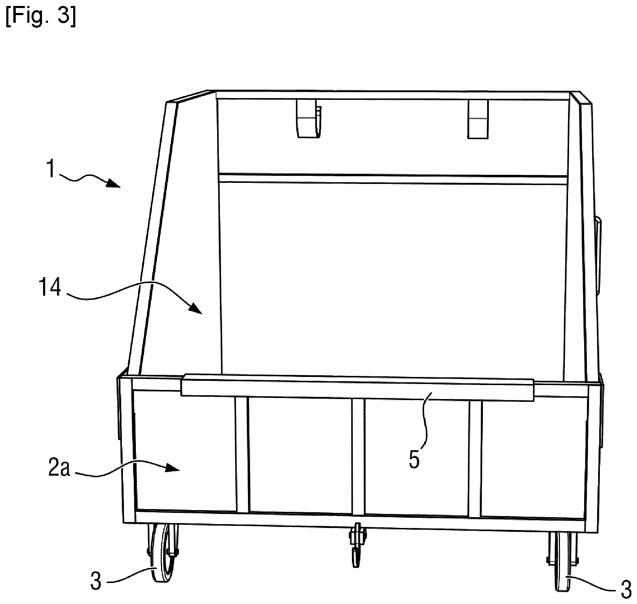

Telle qu'illustrée sur les figures 1 à 3, une cage 1 à matelas selon l'invention comprend une armature métallique 2, typiquement en acier, qui peut être recouverte de plaques en aluminium pour protéger les matelas.

L'armature 2 comprend une partie avant rectangulaire, une partie arrière rectangulaire, les parties avant et arrière étant verticales et la hauteur de la partie avant étant inférieure à la hauteur de la partie arrière, ce qui définit une ouverture 14 de chargement de matelas également adaptée à la forme du camion compacteur pour le déchargement. L'armature 2 comprend également une partie de fond rectangulaire et horizontale, ainsi que deux parties latérales verticales comprenant chacune à l'arrière de la cage 1 une partie rectangulaire prolongée vers l'avant par une partie trapézoïdale, la grande base du trapèze étant de hauteur égale à celle de la partie arrière et la petite base du trapèze étant de hauteur égale à la hauteur de la partie avant.

L'armature 2 délimite ainsi une face avant 2a, une face arrière 2b, une face inférieure 2c et deux faces latérales 2d.

La cage 1 est avantageusement munie de roulettes 3, typiquement au nombre de quatre, qui facilitent son déplacement, ainsi que de poignées 4 pour la préhension de la cage par les usagers. La cage 1 peut être muni d'une poignée horizontale 4 à l'arrière, de deux poignées latérales verticales 4 et de deux poignées inclinées 4 à l'avant.

La cage 1 comprend également à l'avant un élément de liaison et d'accrochage 5 au camion permettant à la cage 1 d'être accrochée à un camion compacteur de déchets et d'être basculée. L'élément de liaison et d'accrochage 5 se présente avantageusement sous la forme d'un profilé en U recourbé vers le bas et s'étendant horizontalement au niveau de l'extrémité supérieure de la face avant 2a de la cage 1. Un élément d'accrochage 6 permet d'éviter que la cage 1 ne tombe dans le camion lorsque la cage 1 est inclinée lors du déchargement des matelas. L'élément d'accrochage 6 se présente avantageusement sous la forme d'un crochet recourbé vers le haut et s'étendant horizontalement au niveau de l'extrémité inférieure de la face avant 2a de la cage 2. Il s'accroche à un tube horizontal situé en partie arrière du camion compacteur.

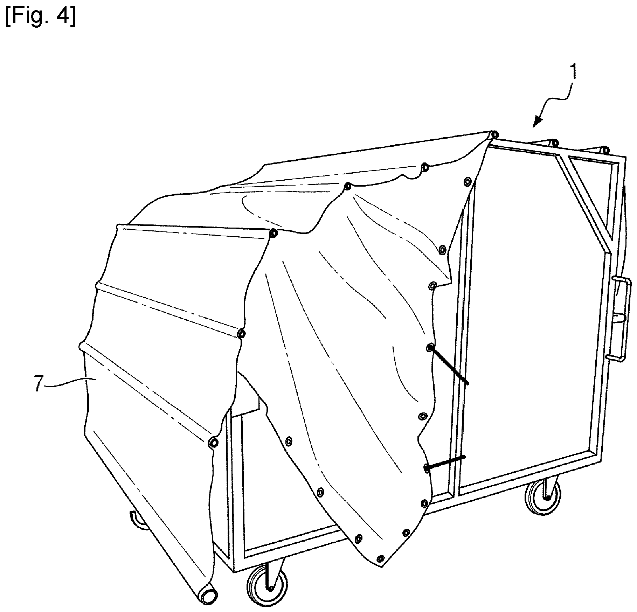

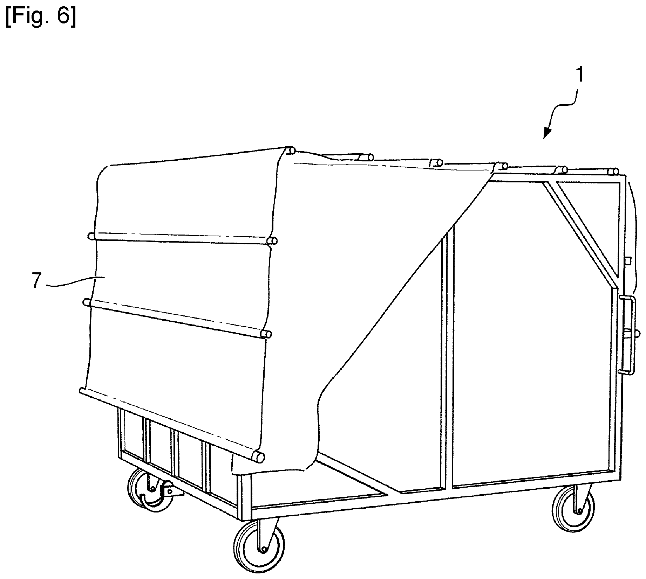

Une couverture 7 permet de recouvrir la cage 1 et de protéger ainsi les matelas de l'humidité et des intempéries (figures 4 à 6). L'élément couvrant 7 permet d'ouvrir et de fermer aisément la face supérieure de la cage 1 et peut s'enrouler dans un berceau formé par deux crochets 8 à l'arrière de la cage 1. L'avant des faces latérales 2d de la cage 1 peut être recouvert d'un élément couvrant. Ainsi, l'ensemble des matelas empilés dans la cage 1 est protégé contre les intempéries.

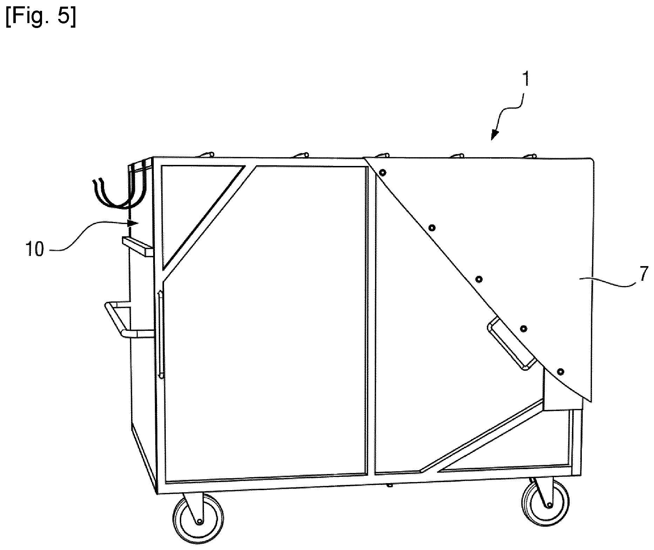

La face arrière 2b de la cage 1 comprend avantageusement une ouverture 10, pouvant être fermée par un élément couvrant, et qui permet à l'usager de regarder à l'intérieur de la cage 1 lors de la manipulation des cages vides, et qui facilite le chargement des derniers matelas dans la partie supérieure de la cage 1 (figure 5).

Conformément à l'invention, la face inférieure 2c de la cage 1 comprend un plancher mobile qui est apte à pivoter selon un axe de rotation situé par exemple à l'arrière ou au milieu de la cage 1, par exemple un axe de rotation situé au niveau de la face arrière 2b et au niveau du fond de l'armature 2 de la cage 1. La rotation du plancher 2c est actionnée par des vérins 11 situés sous le plancher 2c.

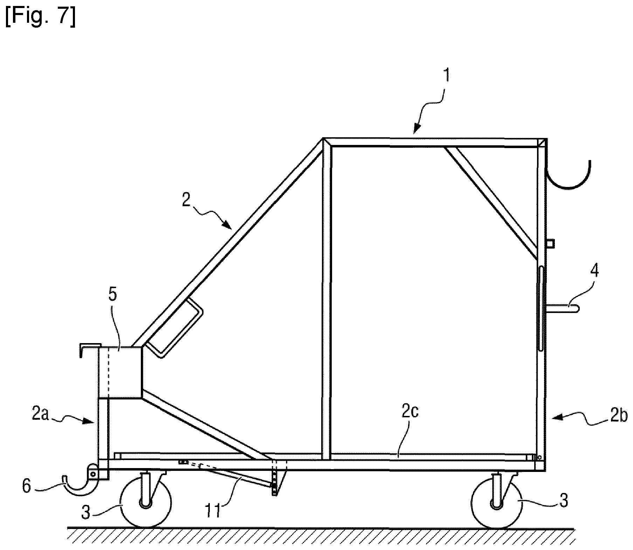

Dans une première position, dite position standard de chargement de matelas, et illustrée à la figure 7, le plancher mobile 2c est en position horizontale, orthogonalement à la face avant 2a et à la face arrière 2b, au niveau de l'extrémité inférieure de la face avant 2a, et les vérins 11 sont comprimés grâce au poids des matelas.

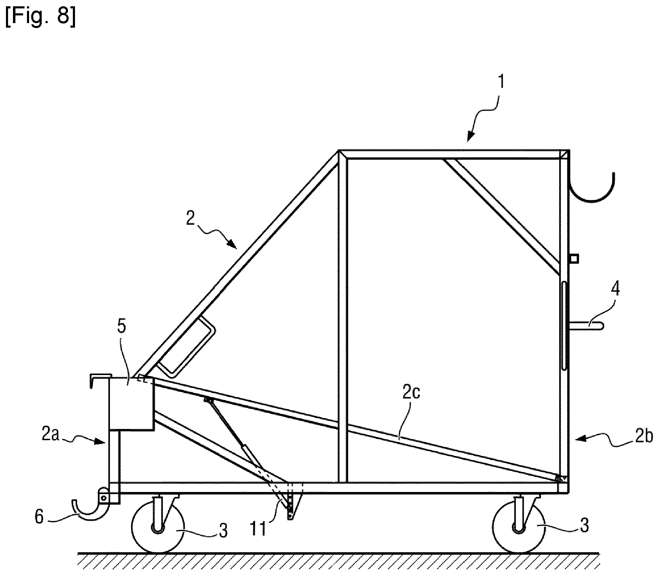

Dans une deuxième position, dite position de basculement, le poids appliqué sur l'actionneur étant nul ou diminuant, l'actionneur se détend, ce qui fait pivoter le plancher 2c qui est soulevé vers l'avant de la cage 1, et l'extrémité avant du plancher mobile 2c se situe au niveau de l'extrémité supérieure de la face avant 2a (figure 8).

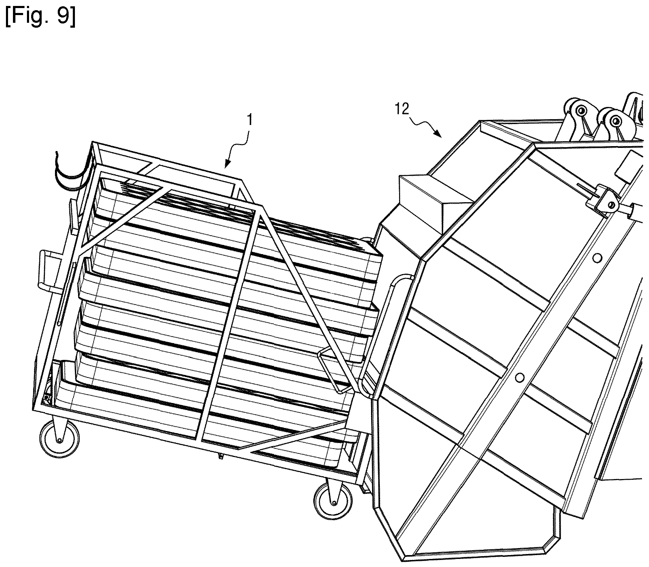

La suite de la description est consacrée à un exemple de chargement en matelas usagés d'un camion 12 compacteur de déchets. Les figures 9 à 13 représentent la cage sans les plaques latérales recouvrant l'armature métallique.

La cage 1, chargée en matelas usagés 13, est accrochée au camion compacteur 12 via l'élément de liaison et d'accrochage de la cage 1 (figure 9).

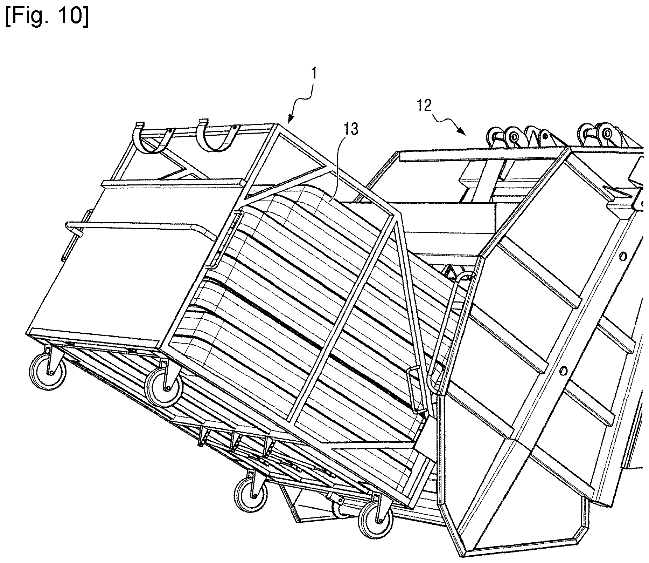

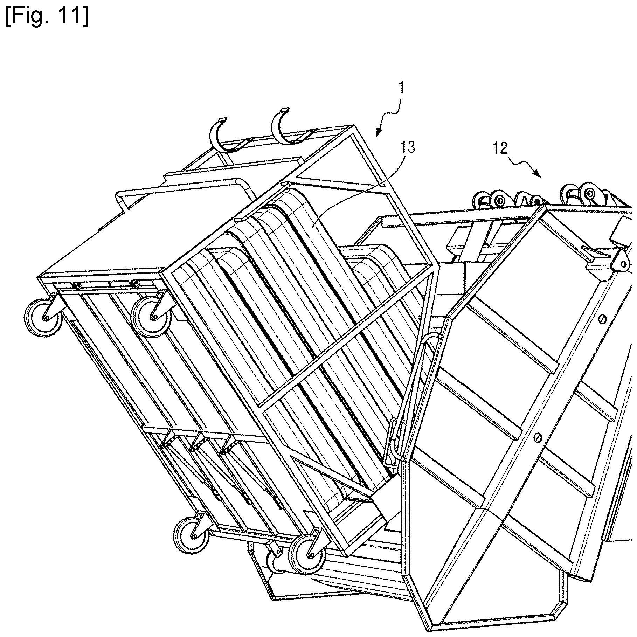

Le camion compacteur procède ensuite au basculement de la cage vers le camion, de manière à collecter les matelas usagés 13 dans le camion (figures 10 et 11).

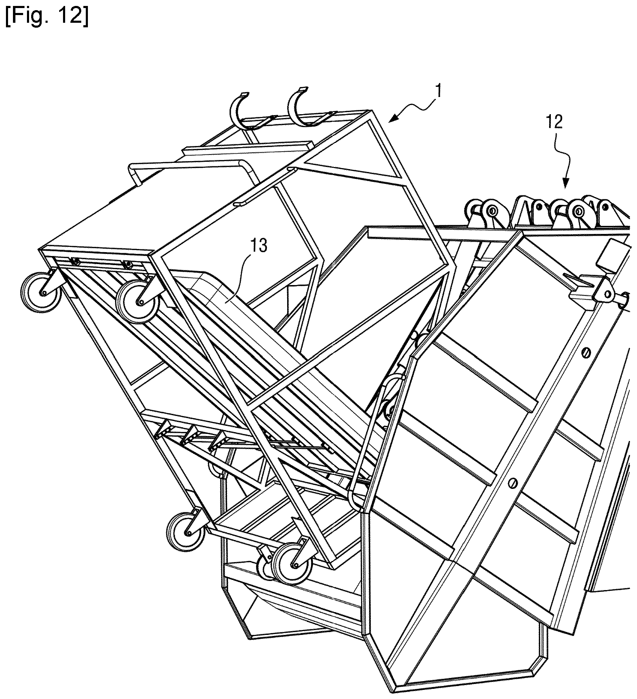

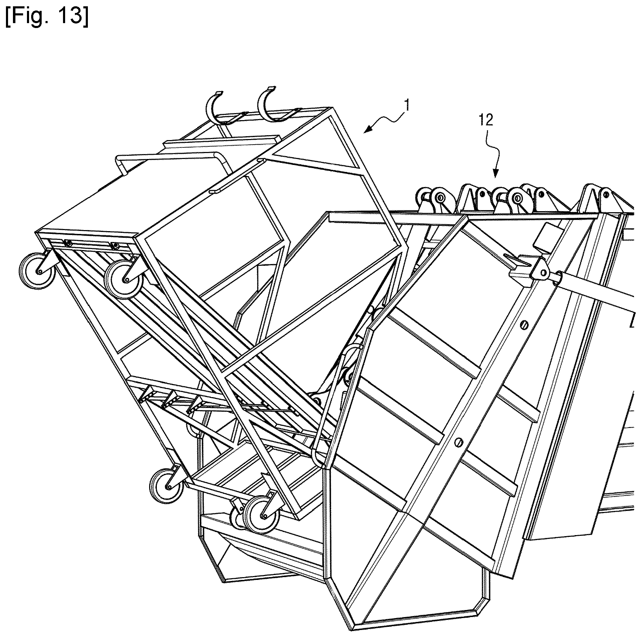

Les vérins 11 se détendent, ce qui permet de faire pivoter le plancher mobile depuis sa position standard de chargement vers sa position de basculement. Ce pivotement du plancher mobile permet d'aider à décharger les derniers matelas hors de la cage (figures 12 et 13). Ainsi, les matelas 13 situés au fond de la cage 1 peuvent glisser en douceur vers le camion 12. Le procédé a permis de collecter dans le camion compacteur 5,4 tonnes de matelas contre 1,5 tonnes dans un camion standard.

La cage selon l'invention présente ainsi de nombreux avantages.

Il s'agit d'une cage de stockage mobile facilement déplaçable par les clients et le chauffeur et qui peut être basculée dans le camion compacteur de déchets standard en actionnant un bouton poussoir du camion. Ce système permet d'éviter un chargement manuel, de réduire le temps de chargement du camion, et d'améliorer l'ergonomie pour le personnel. Le conducteur évite le contact avec les matelas, ce qui est important pour des raisons d'hygiène. L'absence de manipulation lors du chargement du camion élimine les risques pour la santé (blessures au dos) liés au poids et à la taille des matelas.

Le chargement de la cage est beaucoup plus sûr et facile que le chargement d'un conteneur fermé dans lequel l'usager doit rentrer déposer son matelas. On évite en particulier tout risque de chute et tout contact rapproché avec les matelas.

Les matelas peuvent être facilement empilés dans la cage, sans risque qu'ils tombent.

La cage est mobile et peut être facilement déplacée manuellement grâce aux roues et aux poignées qui l'équipent. Cette manipulation facile peut être particulièrement utile pour les entreprises ou les parcs à conteneurs où l'on manque d'espace.

Chaque camion compacteur est équipé d'un système de pesage, ce qui permet d'enregistrer immédiatement le poids de matelas par cage.

La cage dispose d'une couverture étanche et bien fermée qui peut être facilement pliée ou dépliée par le client ou le conducteur du camion.

La logistique est également optimisée. Environ dix à vingt matelas (un mélange de matelas une personne et deux personnes) peuvent être empilés dans la cage, ce qui représente un poids compris entre 220 et 250 kg. Il est possible de transporter les matelas par le camion de compactage (5,5 T) directement vers le centre de recyclage. L'utilisation d'un camion standard nécessiterait un stockage intermédiaire et un camion à plancher mobile (Walking Floor) plus grand (3,5 T) de transfert vers l'installation de recyclage. D'un point de vue économique, les coûts de transport et la quantité de dioxyde de carbone émis sont réduits avec l'invention.

Enfin, les parois en aluminium garantissent que les matelas ne soient pas endommagés ou ne deviennent pas mouillés ou humides.

## Revendications

1. Cage (1) pour matelas usagés (13) destinée à être déchargée dans un camion compacteur de déchets (12), comprenant :
- une face avant (2a), s'étendant entre une extrémité inférieure et une extrémité supérieure de la face avant,
- une face arrière (2b),
- deux faces latérales (2d),
**caractérisée en ce que**:
- la face avant est munie d'un élément de liaison et d'accrochage (5) destiné à l'accrochage de la cage (1) au camion (12),
et **en ce que** la cage comprend en outre
- une face inférieure munie d'un plancher mobile (2c),
la face avant (2a) présentant une hauteur inférieure à celle de la face arrière (2b), de manière à définir une ouverture (14) de chargement de matelas (13), et le plancher mobile (2c) étant monté à rotation autour d'un axe situé préférentiellement à l'arrière de la cage (1), et actionné en rotation par au moins un actionneur (11), de manière à pouvoir pivoter entre une position standard de chargement de matelas (13) dans laquelle le plancher mobile (2c) s'étend au niveau de l'extrémité inférieure de la face avant (2a), et une position de basculement dans laquelle l'extrémité avant du plancher mobile (2c) est surélevée par rapport à l'extrémité inférieure de la face avant (2a).

2. Cage (1) selon la revendication 1, **caractérisée en ce que** ledit au moins un actionneur (11) est un vérin ou un ressort à gaz.

3. Cage (1) selon la revendication 1 ou 2, **caractérisée en ce qu'**elle est munie de roulettes (3) et d'au moins une poignée (4).

4. Cage (1) selon l'une des revendications 1 à 3, **caractérisée en ce que** les faces latérales (2d) présentent chacune à l'arrière une partie rectangulaire de hauteur égale à la hauteur de la face arrière (2b), suivie à l'avant d'une partie trapézoïdale de hauteur évoluant progressivement de l'arrière vers l'avant entre la hauteur de la face arrière (2b) et la hauteur de la face avant (2a).

5. Cage (1) selon l'une des revendications 1 à 4, **caractérisée en ce que** la face arrière (2b) est munie d'une ouverture (10).

6. Cage (1) selon l'une des revendications 1 à 5, **caractérisée en ce qu'**elle comprend en outre un élément couvrant (7) fixé au niveau de la face arrière (2b) et destiné à recouvrir la cage (1).

7. Cage (1) selon la revendication 6, **caractérisée en ce que** la face arrière est munie d'une zone de réception (8) de l'élément couvrant (7) replié.

8. Utilisation d'une cage (1) selon l'une des revendications 1 à 7 pour le chargement de matelas usagés (13) dans un camion compacteur de déchets (12).

9. Procédé de chargement de matelas usagés (13) dans un camion compacteur de déchets (12), **caractérisé en ce qu'**il met en œuvre une cage (1) selon l'une des revendications 1 à 7.

10. Procédé selon la revendication 9, **caractérisé en ce qu'**il comprend :
- une étape de chargement en matelas usagés (13) d'une cage (1) selon l'une des revendications 1 à 7,
- une étape d'accrochage de la cage (1) au camion (12),
- une étape de basculement de la cage (1) vers le camion (12), de manière à charger le camion (12) en matelas usagés (13), ladite étape de basculement comprenant l'actionnement dudit au moins un actionneur (11) de la cage (1) de manière à faire pivoter le plancher mobile (2c) de la cage (1) jusqu'à sa position de basculement.

## Patentansprüche

1. Käfig (1) für gebrauchte Matratzen (13), der dazu bestimmt ist, in einen Müllverdichtungswagen (12) ausgeladen zu werden, umfassend:
- eine Vorderseite (2a), die sich zwischen einem unteren Ende und einem oberen Ende der Vorderseite erstreckt,
- eine Rückseite (2b),
- zwei Seitenflächen (2d),
**dadurch gekennzeichnet, dass:**
- die Vorderseite mit einem Verbindungs- und Befestigungselement (5) versehen ist, das zur Befestigung des Käfigs (1) am LKW (12) bestimmt ist,
und **dadurch gekennzeichnet, dass** der Käfig ferner umfasst
- eine Unterseite, die mit einem beweglichen Boden (2c) versehen ist,
die Vorderseite (2a) eine geringere Höhe als die Rückseite (2b) aufweist, um eine Öffnung (14) zum Beladen der Matratzen (13) zu definieren, und der bewegliche Boden (2c) drehbar um eine Achse montiert ist, die sich vorzugsweise an der Rückseite des Käfigs (1) befindet, und durch mindestens einen Aktuator (11) in Drehung versetzt wird, um zwischen einer Standard-Matratzenbeladungsposition (13), in der sich der bewegliche Boden (2c) auf der Höhe des unteren Endes der Vorderseite (2a) erstreckt, und einer Kippposition schwenken zu können, in der das vordere Ende des beweglichen Bodens (2c) gegenüber dem unteren Ende der Vorderseite (2a) angehoben ist.

2. Käfig (1) nach Anspruch 1, **dadurch gekennzeichnet, dass** der mindestens eine Aktuator (11) ein Zylinder oder eine Gasfeder ist.

3. Käfig (1) nach Anspruch 1 oder 2, **dadurch gekennzeichnet, dass** er mit Rollen (3) und mindestens einem Griff (4) versehen ist.

4. Käfig (1) nach einem der Ansprüche 1 bis 3,
**dadurch gekennzeichnet, dass** die Seitenflächen (2d) jeweils an der Rückseite einen rechteckigen Teil mit einer Höhe aufweisen, die der Höhe der Rückseite (2b) entspricht, gefolgt an der Vorderseite von einem trapezförmigen Teil mit einer Höhe, die von hinten nach vorne zwischen der Höhe der Rückseite (2b) und der Höhe der Vorderseite (2a) progressiv verläuft.

5. Käfig (1) nach einem der Ansprüche 1 bis 4,
**dadurch gekennzeichnet, dass** die Rückseite (2b) mit einer Öffnung (10) versehen ist.

6. Käfig (1) nach einem der Ansprüche 1 bis 5,
**dadurch gekennzeichnet, dass** er ferner ein Abdeckelement (7) umfasst, das an der Rückseite (2b) befestigt ist und dazu bestimmt ist, den Käfig (1) zu bedecken.

7. Käfig (1) nach Anspruch 6, **dadurch gekennzeichnet, dass** die Rückseite mit einem Aufnahmebereich (8) für das umgeklappte Abdeckelement (7) versehen ist.

8. Verwendung eines Käfigs (1) nach einem der Ansprüche 1 bis 7 zum Beladen der gebrauchten Matratzen (13) in einen Müllverdichtungswagen (12).

9. Verfahren zum Beladen der gebrauchten Matratzen (13) in einen Müllverdichtungswagen (12), **dadurch gekennzeichnet, dass** es einen Käfig (1) nach einem der Ansprüche 1 bis 7 verwendet.

10. Verfahren nach Anspruch 9, **dadurch gekennzeichnet, dass** es besteht aus:
- einem Schritt des Beladens eines Käfigs (1) nach einem der Ansprüche 1 bis 7 mit gebrauchten Matratzen (13),
- einem Schritt des Anhängens des Käfigs (1) an den Lastwagen (12),
- einem Schritt des Kippens des Käfigs (1) in Richtung des LKW (12), um den LKW (12) mit gebrauchten Matratzen (13) zu beladen, wobei der Schritt des Kippens die Betätigung des mindestens einen Aktuators (11) des Käfigs (1) umfasst, um den beweglichen Boden (2c) des Käfigs (1) bis zu seiner Kippposition zu schwenken.

## Claims

1. A container (1) for used mattresses (13) intended to be unloaded into a waste compactor truck (12), comprising:
- a front face (2a) extending between a lower end and an upper end of the front face,
- a rear face (2b),
- two lateral faces (2d),
**characterized in that**
- the front face is provided with a connecting and attaching element (5) intended for attaching the cage (1) to the truck (12),
and **in that** the cage further comprises
- a lower face provided with a moveable floor (2c),
the front face (2a) having a height lower than that of the rear face (2b) so as to define an opening (14) for loading the mattress (13), and the moveable floor (2c) being mounted so as to rotate about an axis preferably located at the rear of the container (1) and being made to rotate by at least one actuator (11) so as to be able to pivot between a standard mattress (13) loading position , in which the moveable floor (2c) extends at the level of the lower end of the front face (2a), and a tipping position in which the front end of the moveable floor (2c) is raised with respect to the lower end of the front face (2a).

2. The container (1) according to claim 1, **characterized in that** said at least one actuator (11) is a jack or a gas spring.

3. The container (1) according to claim 1 or 2, **characterized in that** it is provided with casters (3) and at least one handle (4).

4. The container (1) according to one of claims 1 to 3, **characterized in that** the lateral faces (2d) each have at the rear a rectangular portion with a height equal to the height of the rear face (2b), followed at the front by a trapezoidal portion with a height that changes gradually from the rear to the front between the height of the rear face (2b) and the height of the front face (2a).

5. The container (1) according to one of claims 1 to 4, **characterized in that** the rear face (2b) is provided with an opening (10).

6. The container (1) according to one of claims 1 to 5, **characterized in that** it also comprises a covering element (7) attached to the rear face (2b) and intended to cover the container (1).

7. The container (1) according to claim 6, **characterized in that** the rear face is provided with a receiving area (8) for the folded covering element (7).

8. The use of a container (1) according to one of claims 1 to 7 for loading used mattresses (13) into a waste compactor truck (12).

9. A method for loading used mattresses (13) into a waste compactor truck (12), **characterized in that** it uses a container (1) according to one of claims 1 to 7.

10. The method according to claim 9, **characterized in that** it comprises:
- a step of loading used mattresses (13) into a container (1) according to one of claims 1 to 7,
- a step of coupling the container (1) to the truck (12),
- a step of tipping the container (1) toward the truck (12) so as to load the truck (12) with used mattresses (13), said tipping step comprising the actuation of said at least one actuator (11) of the container (1) so as to pivot the moveable floor (2c) of the container (1) into its tipping position.
